# EUROPÄISCHE PATENTANMELDUNG

(11) **EP 2 755 035 A1**
(43) Veröffentlichungstag der Anmeldung: **16.07.2014**
(21) Anmeldenummer: 13150593.5
(22) Anmeldetag: 09.01.2013
(51) Int. Cl.: G01N 35/02, G01N 35/04, B01L 9/00, B01L 9/06

(54) **Vorrichtung zum Transport von Reaktionsgefäßen**

(71) Anmelder: Siemens Healthcare Diagnostics Products GmbH, 35041 Marburg (DE)
(72) Erfinder: Wilmes, Hugo, 65812 Bad Soden (DE); Bernhard, Joachim, 61184 Karben (DE); Filzinger, Joerg, 65830 Kriftel (DE)

(57) **Zusammenfassung**

Die Erfindung betrifft eine drehbare Vorrichtung (1) zum Transport von Reaktionsgefäßen in einem automatischen Analysegerät, umfassend eine kreisringförmige Basisplatte (16) und eine Anzahl von mit der Basisplatte (16) verbundenen, vorzugsweise aus einem Kunststoff gebildeten Halterungen (2), die die Aufnahmepositionen (4, 6) für die Reaktionsgefäße umfassen.

## Beschreibung

Die Erfindung betrifft eine Vorrichtung zum Transport von Reaktionsgefäßen in einem automatischen Analysegerät, umfassend eine kreisringförmige Basisplatte und eine Mehrzahl von mit der Basisplatte lösbar verbundenen, kreisringsegmentförmigen Halterungen für Reaktionsgefäße.

Zahlreiche Nachweis- und Analyseverfahren zur Bestimmung physiologischer Parameter in Körperflüssigkeitsproben wie Blut, Plasma, Serum oder Urin oder in anderen biologischen Proben werden automatisiert in entsprechenden Analysegeräten durchgeführt.

Heutige Analysegeräte sind in der Lage, eine Vielzahl verschiedenartiger Nachweisreaktionen und Analysen mit einer Vielzahl von Proben durchzuführen. Gängige Analysegeräte, wie sie im klinischen Labor oder in Blutbanken zum Einsatz kommen, umfassen üblicherweise einen Bereich für die Zuführung von Probengefäßen, die die zu analysierenden Primärproben enthalten. Zur Einspeisung der Probengefäße in das Analysegerät ist üblicherweise ein Transportsystem vorgesehen, das die Probengefäße zunächst zu einer Probenidentifikationseinrichtung transportiert, die probenspezifische Informationen, die auf einem Probengefäß angebracht sind, erfasst und in eine Speichereinheit weiterleitet. Anschließend werden die Probengefäße zu einer Probenentnahmestation transportiert. Mit Hilfe einer Probenpipettiereinrichtung wird dort mindestens ein Aliquot der Probenflüssigkeit aus einem Probengefäß entnommen und in ein Reaktionsgefäß transferiert.

Bei den Reaktionsgefäßen handelt es sich in der Regel um Einwegküvetten, die in einem Küvettenbehälter im Analysegerät vorrätig gehalten werden und die automatisch aus dem Vorratsbehälter in definierte Aufnahmepositionen transferiert werden. Es existieren jedoch auch Geräte, bei denen die Küvetten mehrfach verwendet werden, indem sie vor dem nächsten Gebrauch gewaschen werden. Die Reagenzien, die für die Bereitstellung von verschiedenartigen, testspezifischen Reaktionsansätzen erforderlich sind, befinden sich in Reagenzbehältern, die in einer Reagenzstation aufbewahrt werden. Die Reagenzbehälter werden dem Analysegerät entweder automatisch oder manuell zugeführt.

Besonders verbreitet sind Messsysteme, die auf photometrischen (z.B. turbidimetrischen, nephelometrischen, fluorometrischen oder luminometrischen) oder radiometrischen Messprinzipien beruhen. Diese Verfahren ermöglichen den qualitativen und quantitativen Nachweis von Analyten in flüssigen Proben, ohne zusätzliche Trennschritte vorsehen zu müssen. Die Bestimmung klinisch relevanter Parameter, wie zum Beispiel der Konzentration oder der Aktivität eines Analyten erfolgt vielfach, indem ein Aliquot einer Körperflüssigkeit eines Patienten gleichzeitig oder nacheinander mit einem oder mehreren Testreagenzien im Reaktionsgefäß vermischt wird, wodurch eine biochemische Reaktion in Gang gesetzt wird, die eine messbare Veränderung einer optischen Eigenschaft des Testansatzes bewirkt.

Das Messergebnis wird von dem Messsystem wiederum in eine Speichereinheit weiterleitet und ausgewertet. Anschließend liefert das Analysegerät einem Benutzer über ein Ausgabemedium, wie z.B. einen Monitor, einen Drucker oder eine Netzwerkverbindung probenspezifische Messwerte.

Die Reaktionsgefäße (Küvetten) mit den Reaktionsansätzen werden den verschiedenen Messsystemen häufig auf einem kreisrunden Transportrad zugeführt. Ein derartiges Rad ist üblicherweise mit senkrechter Mittelachse in dem automatischen Analysegerät angeordnet und weist entlang seines Außenumfangs eine Vielzahl von Aufnahmepositionen für Reaktionsgefäße auf. Die Reaktionsgefäße sind üblicherweise zylindrisch ausgestaltet und mit ihrer Mittelachse parallel zu der des Transportrades ausgerichtet. Dadurch können die Reaktionsgefäße von oben in die Aufnahmepositionen eingesetzt werden, mittels Drehung des Transportrades an einen anderen Ort bewegt und dort wieder entnommen oder mit Probenflüssigkeit oder Reagenzflüssigkeit befüllt werden.

Derartige Transporträder für Reaktionsgefäße erreichen unter Umständen erhebliche Durchmesser je nach Anzahl der Aufnahmepositionen. In größeren Analysegeräten kann ein Transportrad durchaus einen Durchmesser von 80 bis 90 cm erreichen. Gleichzeitig ist es jedoch erforderlich, dass eine hohe Positionierungsgenauigkeit gewährleistet bleibt, um den gezielten, automatischen Zugriff durch Greifarme, Pipettiervorrichtungen etc. zu ermöglichen. Somit ist das Transportrad typischerweise vergleichsweise massiv und einteilig ausgeführt. Dies hat den Nachteil, dass die Herstellung der Transporträder schwierig und damit auch kostspielig ist.

Es ist daher Aufgabe der Erfindung, eine Vorrichtung zum Transport von Reaktionsgefäßen in einem automatischen Analysegerät bereit zu stellen, die eine hohe Positionierungsgenauigkeit ermöglicht und andererseits besonders einfach und kostengünstig herzustellen ist.

Diese Aufgabe wird erfindungsgemäß gelöst, indem das Transportrad eine kreisringförmige Basisplatte und eine Mehrzahl von mit der Basisplatte lösbar verbundenen, kreisringsegmentförmigen Halterungen umfasst.

Dies hat überdies den Vorteil, dass eine erhöhte Flexibilität des Systems erzielt wird, weil die Halterungen mit den Aufnahmepositionen für die Reaktionsgefäße leicht ausgetauscht werden können. Soll beispielsweise ein anderer Reaktionsgefäßtyp in dem Analysegerät verwendet werden, der andere Abmessungen aufweist als der zuvor verwendete, so muss nicht das gesamte Transportrad demontiert und durch ein neues, aufwändig hergestelltes Transportrad mit geeigneten Aufnahmepositionen ersetzt werden, sondern es müssen lediglich die auf der Basisplatte angebrachten Halterungen ausgetauscht werden. Auch in dem Fall, dass einige Aufnahmepositionen verunreinigt sind, muss nicht das gesamte Transportrad demontiert und gereinigt werden, sondern es können lediglich die Halterungen ausgetauscht oder zur Reinigung entnommen werden, die von der Verunreinigung betroffen sind.

Gegenstand der vorliegenden Erfindung ist daher eine kreisringförmige Vorrichtung zum Transport von Reaktionsgefäßen in einem automatischen Analysegerät, wobei die Vorrichtung eine Vielzahl von Aufnahmepositionen für die Aufnahme von jeweils einem Reaktionsgefäß aufweist. Die erfindungsgemäße Vorrichtung umfasst eine kreisringförmige Basisplatte und eine Mehrzahl von mit der Basisplatte lösbar verbundenen, kreisringsegmentförmigen Halterungen, wobei die kreisringsegmentförmigen Halterungen die Aufnahmepositionen für die Reaktionsgefäße umfassen.

Die kreisringförmige, vorzugsweise einteilige Basisplatte gewährleistet die für die Positionierungsgenauigkeit erforderliche Stabilität der Transportvorrichtung. Für eine besonders hohe Stabilität ist die Basisplatte vorteilhafterweise aus einem Metall, insbesondere aus Stahl gebildet. Hierdurch ergibt sich eine besonders hohe Verwindungssteifigkeit, sodass die Positionierung der Reaktionsgefäße besonders exakt erfolgen kann. Hierdurch wird wiederum das korrekte Zusammenspiel mit anderen Vorrichtungen des automatischen Analysegeräts wie z.B. mit Greifarmen oder Pipettiervorrichtungen gewährleistet.

Die kreisringsegmentförmigen Halterungen mit den Aufnahmepositionen für die Reaktionsgefäße sind mit der Basisplatte kraftschlüssig, aber lösbar verbunden. Zur kraftschlüssigen Verbindung der Halterungen mit der Basisplatte eignen sich beispielsweise Bolzen oder Bolzenschrauben.

Bevorzugterweise bestehen die kreisringsegmentförmigen Halterungen aus Kunststoff. Dies hat den Vorteil, dass die Halterungen einfach und preisgünstig, aber auch präzise hergestellt werden können, beispielsweise im Spritzgussverfahren. Geeignete Kunststoffe für die Herstellung der kreisringsegmentförmigen Halterungen sind beispielsweise Polypropylen, Polyethylen oder Polyoxymethylen sowie elektrisch leitende Kunststoffe.

In einer bevorzugten Ausführungsform sind mehrere oder alle der kreisringsegmentförmigen Halterungen identisch geformt. Hierdurch wird eine Vereinfachung im Herstellungsprozess und der Montage erreicht. Die kreisringsegmentförmigen Halterungen sind so gefertigt, dass eine vorgegebene Anzahl die kreisringförmige Basisplatte vollständig bedeckt und damit einen geschlossenen Kreisring aus Kreisringsegmenten auf der Basisplatte bildet. Die kreisringsegmentförmigen Halterungen können somit in großer Zahl in einer Form im Spritzgussverfahren gefertigt werden und durch einfache Montage auf der Basisplatte befestigt werden.

In zusätzlicher oder alternativer vorteilhafter Ausgestaltung weist eine kreisringsegmentförmige Halterung Aufnahmepositionen auf, die bezüglich der kreisringförmigen Transportvorrichtung auf unterschiedlichen Radien, also konzentrisch angeordnet sind. Hierdurch kann die Anzahl der Aufnahmepositionen für Reaktionsgefäße bei gleichem Durchmesser des Rades erhöht werden. Die Aufnahmepositionen sind dann auf dem jeweiligen Kreisringsegment in Kreisbögen mit unterschiedlichem Radius angeordnet. Bevorzugterweise sind die Aufnahmepositionen in mindestens zwei Kreisbögen mit unterschiedlichem Radius angeordnet. Die Anordnung in drei, vier, fünf oder mehr Kreisbögen mit unterschiedlichem Radius ist ebenfalls möglich. Dabei sind vorteilhafterweise auf einem geringeren Radius angeordnete Aufnahmepositionen höher angeordnet als auf einem größeren Radius angeordnete Aufnahmepositionen. Somit liegt der obere Rand der Aufnahmepositionen, die weiter innen auf dem Rad angeordnet sind, höher als der obere Rand der Aufnahmepositionen, die weiter außen angeordnet sind. Dies hat den Vorteil, dass innenliegende Aufnahmepositionen für solche Greifarme gut erreichbar sind, die in radialer Richtung von außen auf die Reaktionsgefäße in den Aufnahmepositionen zugreifen.

In weiterer vorteilhafter Ausgestaltung weist die erfindungsgemäße Vorrichtung zum Transport von Reaktionsgefäßen einen Zahnkranz zum Eingriff in ein motorisiertes Zahnrad auf. Der Zahnkranz dient dem Antrieb und der Steuerung der Drehung der kreisringförmigen Transportvorrichtung für Reaktionsgefäße. Ein in räumlicher Nähe zur Transportvorrichtung vorgesehenes Zahnrad wird durch einen Motor bewegt, der wiederum von der Steuereinrichtung des automatischen Analysegeräts angesteuert wird. Durch die Bewegung des Zahnrads, welches in den Zahnkranz der Transportvorrichtung eingreift, wird die Transportvorrichtung bewegt, und die in den Aufnahmepositionen befindlichen Reaktionsgefäße werden positioniert. Vorteilhafterweise ist der Zahnkranz am Außenumfang der kreisringförmigen Transportvorrichtung angeordnet, so dass es nicht zu Ungenauigkeiten in der Positionierung durch Schwingungen oder Verwindungen aufgrund der Elastizität des Materials kommt, wie dies z.B. bei einem Antrieb in der Achse des Rades auftreten könnte.

In besonders vorteilhafter Ausgestaltung ist der Zahnkranz dadurch gebildet, dass die mit der Basisplatte lösbar verbundenen, kreisringsegmentförmigen Halterungen einen gezahnten Rand aufweisen. Dies ermöglicht insbesondere dann eine einfache Fertigung des Zahnkranzes, wenn die Halterungen aus Kunststoff bestehen und im Kunststoffspritzgussverfahren gefertigt werden können. Der Zahnkranz der Transportvorrichtung muss so nicht mehr gefräst werden wie bei bisher üblichen einteiligen Ausführungen. Hierdurch kann die gesamte Vorrichtung kostengünstiger gefertigt werden. Am Rand der jeweiligen Halterung, wo Zahnkranzteile verschiedener Halterungen aneinander stoßen, sollten diese jeweils so gefertigt sein, dass die Teilung des Zahnprofils eingehalten wird, d.h. dass die Abstände der Zähne auch über Segmentgrenzen hinweg eingehalten werden.

In weiterer vorteilhafter Ausgestaltung der erfindungsgemäßen Transportvorrichtung weist die Basisplatte eine zum Mittelpunkt hin gewandte, umlaufende Schneide zum Eingriff in umlaufende Nuten von drehbar gelagerten Zylindern auf. Dies bewirkt eine drehbare Lagerung und eine Fixierung der kreisringförmigen Transportvorrichtung. Die Zylinder sind dabei in ihrer Anzahl und Verteilung so angeordnet, dass eine stabile Schneidenlagerung gewährleistet ist und das Rad in alle Richtungen fixiert ist.

Die vorliegende Erfindung betrifft ferner ein automatisches Analysegerät mit einer erfindungsgemäßen Vorrichtung zum Transport von Reaktionsgefäßen, wobei die Vorrichtung drehbar gelagert ist.

In vorteilhafter Ausgestaltung weist das Analysegerät mindestens ein motorisiertes Zahnrad auf, das so angeordnet ist, dass es sich zum Eingriff in den Zahnkranz einer erfindungsgemäßen Transportvorrichtung für Reaktionsgefäße eignet. Das motorisierte Zahnrads, welches in den Zahnkranz der Transportvorrichtung eingreift, bewirkt die Bewegung der Transportvorrichtung und damit die Positionierung der in den Aufnahmepositionen befindlichen Reaktionsgefäße.

In einer weiteren vorteilhaften Ausgestaltung weist das Analysegerät mindestens zwei drehbar gelagerte Zylinder mit umlaufenden Nuten auf, wobei die drehbaren Zylinder so angeordnet sind, dass sie sich zum Eingriff in eine die Basisplatte umlaufende Schneide, die zum Mittelpunkt der Basisplatte hin gewandt ist, eignet. Die Zylinder sind dabei in ihrer Anzahl und Verteilung so angeordnet, dass eine stabile Schneidenlagerung gewährleistet ist und das Rad in alle Richtungen fixiert ist.

In besonders vorteilhafter Ausgestaltung weist das Analysegerät drei der drehbar gelagerten Zylinder auf. Diese sind vorteilhafterweise in den Ecken eines gleichschenkligen Dreiecks innerhalb der kreisringförmigen Transportvorrichtung angeordnet, so dass ein gleichmäßiger Halt der Transportvorrichtung in alle Richtungen gewährleistet ist. Dabei ist vorteilhafterweise einer der Zylinder selbstrückstellend in Richtung des Mittelpunktes der kreisringförmigen Transportvorrichtung schwenkbar. Dies kann beispielsweise durch eine entsprechende Federung erreicht werden. Durch das federnde Lager ist die fertig zusammengesetzte Transportvorrichtung mit Basisplatte und darauf angeordneten Halterungen besonders einfach zu montieren.

Die vorliegende Erfindung betrifft ferner eine kreisringsegmentförmig ausgestaltete Halterung mit einer Mehrzahl von Aufnahmepositionen, wobei jede Aufnahmeposition für jeweils ein Reaktionsgefäß vorgesehen ist. Eine derartige Halterung eignet sich zur Montage auf einer kreisringförmigen Basisplatte und damit zur Herstellung einer kreisringförmigen Vorrichtung zum Transport von Reaktionsgefäßen in einem automatischen Analysegerät.

In einer vorteilhaften Ausführungsform besteht die Halterung aus Kunststoff, bevorzugterweise aus Polypropylen, Polyethylen, Polyoxymethylen oder aus einem elektrisch leitenden Kunststoff.

In einer weiteren vorteilhaften Ausführungsform weist die Halterung einen gezahnten Rand auf.

Bevorzugterweise sind die Aufnahmepositionen der Halterung auf unterschiedlichen Radien des Kreisringsegments konzentrisch angeordnet. Dabei sind die auf einem geringeren Radius angeordneten, also weiter innen liegenden Aufnahmepositionen bevorzugterweise höher angeordnet als die auf einem größeren Radius angeordneten, also weiter außen liegenden Aufnahmepositionen. Bevorzugterweise sind die Aufnahmepositionen in mindestens zwei Kreisbögen mit unterschiedlichem Radius angeordnet. Die Anordnung in drei, vier, fünf oder mehr Kreisbögen mit unterschiedlichem Radius ist ebenfalls möglich.

Die mit der Erfindung erzielten Vorteile bestehen insbesondere darin, dass durch die produktionsseitige Trennung von kreisringförmiger Basisplatte und Halterungen für Aufnahmepositionen ein gleichzeitig besonders stabiles und leicht zu fertigendes Rad zum Transport von Küvetten geschaffen wird. Durch den Kunststoffspritzguss ist der Herstellungsprozess bestimmter Ausführungsformen besonders flexibel, und es können vielfältige Anforderungen integriert werden wie z.B. Zahnkränze zur motorisierten Ansteuerung und Aufnahmepositionenn für Reaktionsgefäße in verschiedenen Höhen und radialen Anordnungen.

Die Erfindung wird anhand einer Zeichnung näher erläutert. Darin zeigen:
- FIG 1: eine aus Kunststoff gefertigte, kreisringsegmentförmige Halterung mit Aufnahmepositionen für Reaktionsgefäße,
- FIG 2: eine Antriebseinheit für eine erfindungsgemäße Transportvorrichtung,
- FIG 3: eine kreisringförmige Basisplatte zur Aufnahme der kreisringsegmentförmigen Halterungen aus FIG 1,
- FIG 4: einen fest montierten drehbaren Zylinder als Schneidenlager,
- FIG 5: einen federnd montierten drehbaren Zylinder als Schneidenlager,
- FIG 6: einen Schnitt durch ein Schneidenlager,
- FIG 7: eine axiale Aufsicht auf zwei zusammengesetzte Halterungen aus FIG 1, und
- FIG 8: eine Aufsicht auf die gesamte Transportvorrichtung.

Gleiche Teile sind in alle Figuren mit denselben Bezugszeichen versehen.

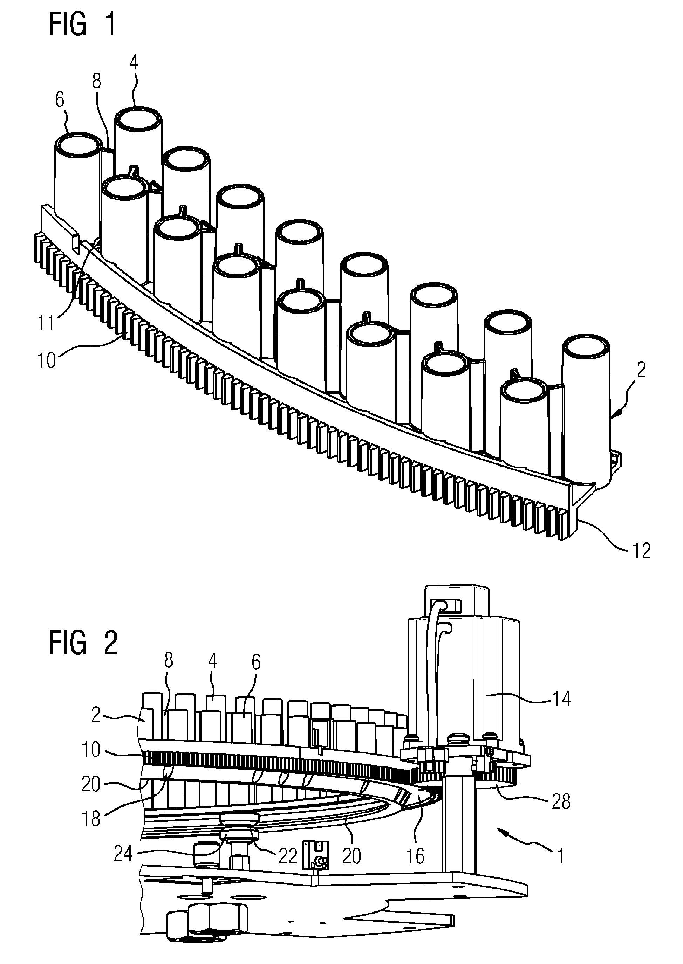

FIG 1 zeigt eine kreisringsegmentförmige Halterung 2 mit Aufnahmepositionen 4, 6 für Reaktionsgefäße. Die Halterung 2 ist kreisringsegmentförmig ausgestaltet und weist insgesamt sechzehn Aufnahmepositionen 4, 6 für Reaktionsgefäße auf. Acht der Aufnahmen 4 sind auf einem ersten Kreisbogen, die anderen acht Aufnahmen 6 auf einem zweiten konzentrischen Kreisbogen mit größerem Radius, d.h. weiter außen angeordnet.

Die Aufnahmepositionen 4, 6 sind im Wesentlichen als nach oben offene Hohlzylinder ausgestaltet. Die auf dem weiter innen liegenden Kreisbogen angeordneten Aufnahmepositionen 4 sind höher als die weiter außen angeordneten Aufnahmepositionen 6, so dass radial von außen zugreifende Transportarme alle Aufnahmepositionen 4, 6 problemlos erreichen können. Die Aufnahmepositionen 4, 6 sind zick-zackförmig mit Stegen 8 verbunden, die die Stabilität erhöhen.

Die Halterung 2 ist aus einem Kunststoff im Spritzgussverfahren gefertigt. Sie weist zylindrische Bohrungen 11 zur Fixierung der Halterung 2 auf der Basisplatte 16 auf. Die Länge einer Halterung 2 ist so bemessen, dass eine Mehrzahl von Halterungen 2 auf einem gemeinsamen Radius aufgereiht einen geschlossenen Kreis ergibt.

Am Außenradius Halterung 2 ist ein Zahnkranz 10 angeordnet. Die Zähne des Zahnkranzes 10 sind dabei am azimutalen Rand 12 so ausgebildet, dass bei der Aneinanderreihung von gleichen Halterungen 2 auf einem Kreis die Teilung, d.h. der Abstand der Zähne auch über Segmentgrenzen hinweg gleich bleibt.

FIG 2 zeigt die montierte Transportvorrichtung 1 mit einem Antrieb 14. Die Halterungen 2 sind auf einer kreisringförmigen Basisplatte 16 mittels Bolzenschrauben 18 montiert. Die Basisplatte 16 ist einteilig aus Stahl gefertigt. An ihrem Innenradius weist sie eine radial nach innen gerichtete, leicht nach unten versetzte Schneide 20 auf. Diese greift in eine Nut 22 ein, die umlaufend in einen drehbar gelagerten Zylinder 24 eingebracht ist. Diese Schneidenlagerung wird im Folgenden noch detailliert erläutert.

An der Außenseite der so gebildeten Transportvorrichtung 1 für den Transport von Reaktionsgefäßen verläuft der bereits erläuterte Zahnkranz 10. In diesen greift ein Zahnrad 28 ein, welches über den Antrieb 14 bewegt wird. Der Antrieb 14 wird von der Steuereinheit des nicht näher gezeigten automatischen Analysegeräts gesteuert, sodass die Steuereinheit damit die Kontrolle über die Positionierung der Transportvorrichtung gewinnt.

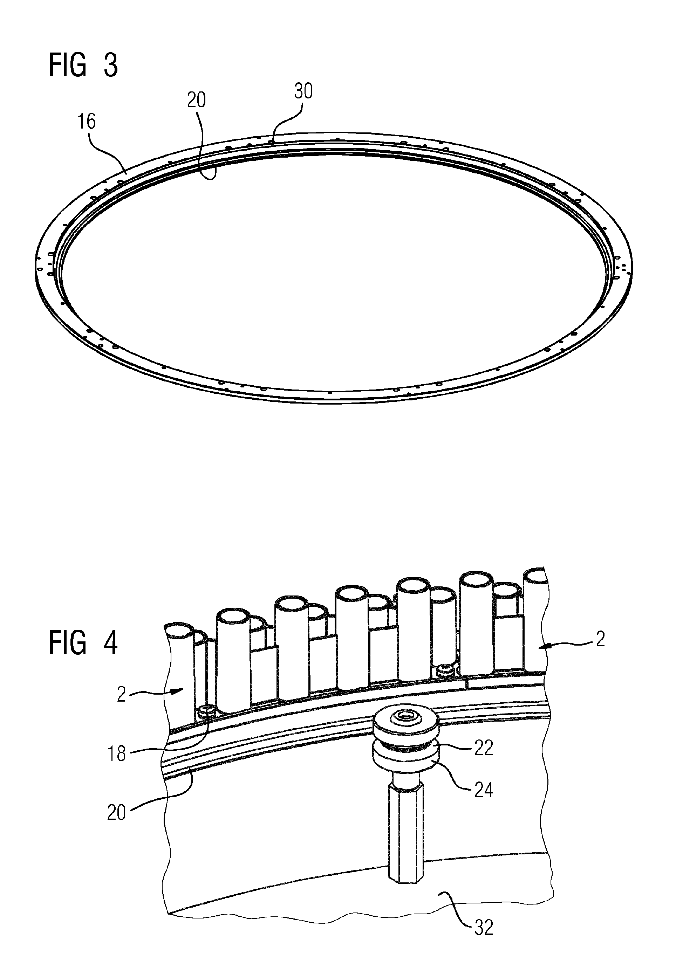

FIG 3 zeigt die bereits beschriebene Basisplatte 16 vollständig. Sie zeigt eine kreisringförmige Grundform mit der nach unten abgesetzten Schneide 20. In die gesamte Basisplatte 16 ist eine Vielzahl von Gewinden 30 zur Fixierung der Halterungen 2 mit Bolzenschrauben 18 eingebohrt.

FIG 4 zeigt einen Ausschnitt der Transportvorrichtung 1 aus Richtung des Mittelpunkts. Sichtbar sind die Bolzenschrauben 18 zur Fixierung der Halterungen 2 auf der Basisplatte 16. Gezeigt ist weiterhin ein Zylinder 24 zur Lagerung der Transportvorrichtung 1. Der Zylinder weist eine Nut 22 auf, die umlaufend in den drehbar gelagerten Zylinder 24 eingebracht ist. Der Zylinder 24 ist an seiner Achse drehbar auf einer Bodenplatte 32 befestigt.

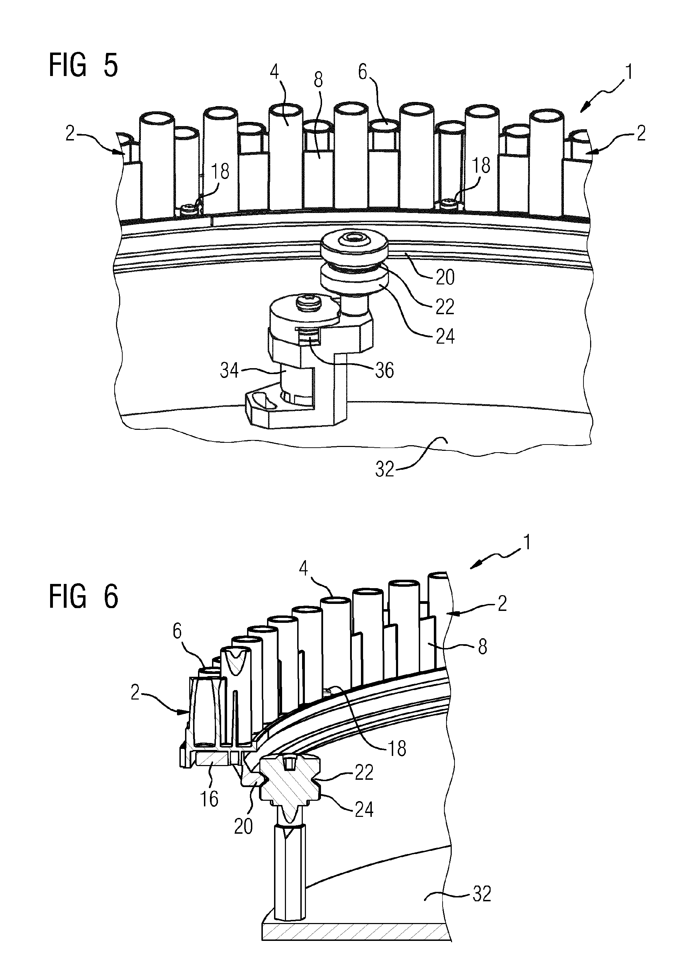

FIG 5 zeigt einen weiteren Zylinder 24, der jedoch federnd gelagert ist. Hierzu ist der Zylinder 24 nicht direkt auf der Bodenplatte 32 befestigt, sondern drehbar auf einem Befestigungselement 34. Das Befestigungselement 34 ist über eine zweite, zur Achse des Zylinders 24 versetzt angeordnete, aber parallele Achse an der Bodenplatte 32 drehbar befestigt. Über eine dieser Achse zugeordnete Feder 36 wird eine Kraft ausgeübt, die bezüglich der Transportvorrichtung 1 nach außen wirkt. Die Bewegung ist dabei mechanisch beschränkt. Durch das federnde Lager wird mittels zweier weiterer, in FIG 4 beschriebener fester Lager, die in den Ecken eines gleichschenkligen Dreiecks auf der Bodenplatte 32 befestigt sind, eine feste Lagerung der Transportvorrichtung 1 erreicht. Durch Einschwenken des federnden Lagers kann die Transportvorrichtung 1 jedoch leicht entnommen werden.

FIG 6 zeigt einen Schnitt durch eines der Lager mit dem Zylinder 24 und zeigt insbesondere das Eingreifen der Schneide 20 in die Nut 22. Verdeutlicht wird hier ebenfalls der Schnitt der Basisplatte 16 mit der nach unten abgesetzten Schneide 20.

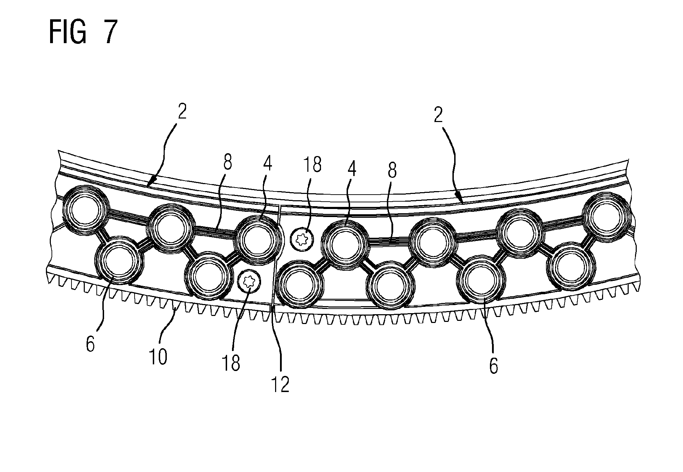

FIG 7 zeigt eine bezüglich der Transportvorrichtung 1 axiale Aufsicht auf zwei aneinander grenzende Halterungen 2. Gezeigt sind die bereits beschriebenen Aufnahmepositionen 4, 6 mit den sie verbindenden Stegen 8, die Schrauben 18 zur Befestigung an der Basisplatte 16 und der Zahnkranz 10. Gut erkennbar ist der über den Rand 12 hinweg gleichbleibende Abstand der Zähne des Zahnkranzes 10.

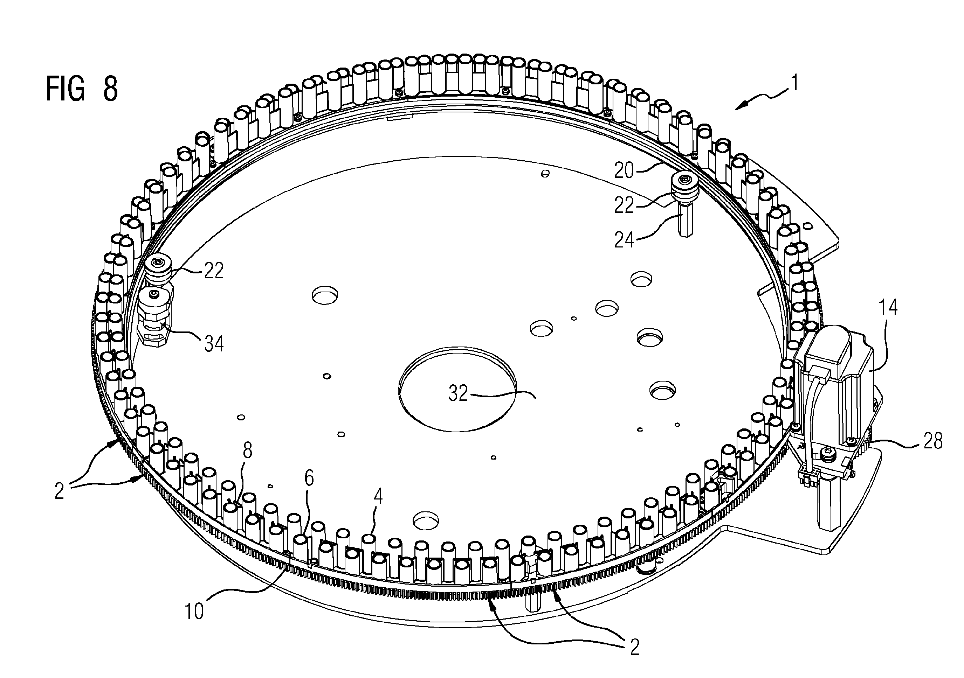

FIG 8 zeigt schließlich eine montierte Transportvorrichtung 1 mit einem Antrieb 14. Die Transportvorrichtung 1 ist über drei in den Ecken eines gleichschenkligen Dreiecks auf der Bodenplatte 32 montierte Lager mit Zylindern 24 gelagert.

### BEZUGSZEICHENLISTE

- 1: Transportvorrichtung
- 2: Halterung
- 4, 6: Aufnahmeposition
- 8: Steg
- 10: Zahnkranz
- 11: Bohrung
- 12: Rand
- 14: Antrieb
- 16: Basisplatte
- 18: Bolzenschraube
- 20: Schneide
- 22: Nut
- 24: Zylinder
- 28: Zahnrad
- 30: Gewinde
- 32: Bodenplatte
- 34: Befestigungselement
- 36: Feder

## Patentansprüche

1. Kreisringförmige Vorrichtung (1) zum Transport von Reaktionsgefäßen in einem automatischen Analysegerät, wobei die Vorrichtung eine Vielzahl von Aufnahmepositionen (4, 6) für die Aufnahme von jeweils einem Reaktionsgefäß aufweist, **dadurch gekennzeichnet, dass** die Vorrichtung (1) eine kreisringförmige Basisplatte (16) und eine Mehrzahl von mit der Basisplatte (16) lösbar verbundenen, kreisringsegmentförmigen Halterungen (2) umfasst, wobei die kreisringsegmentförmigen Halterungen (2) die Aufnahmepositionen (4, 6) umfassen.

2. Vorrichtung (1) nach Anspruch 1, wobei die Basisplatte (16) aus Metall, vorzugsweise aus Stahl gebildet ist und die kreisringsegmentförmigen Halterungen (2) aus Kunststoff gebildet sind.

3. Vorrichtung (1) nach einem der vorhergehenden Ansprüche, wobei die kreisringsegmentförmigen Halterungen (2) über Verbindungselemente, vorzugsweise über Schrauben (18), mit der Basisplatte (16) lösbar verbunden sind.

4. Vorrichtung (1) nach einem der vorhergehenden Ansprüche, wobei mehrere oder alle der Halterungen (2) identisch geformt sind.

5. Vorrichtung (1) nach einem der vorhergehenden Ansprüche, wobei die Anzahl der kreisringsegmentförmigen Halterungen (2) so gewählt ist, dass die kreisringförmige Basisplatte (16) vollständig mit kreisringsegmentförmigen Halterungen (2) bedeckt ist.

6. Vorrichtung (1) nach einem der vorhergehenden Ansprüche, wobei die Aufnahmepositionen (4, 6) der Halterungen (2) bezüglich der kreisringförmigen Vorrichtung (1) auf unterschiedlichen Radien angeordnet sind.

7. Vorrichtung (1) nach Anspruch 6, wobei die auf einem geringeren Radius angeordneten Aufnahmepositionen (4) höher angeordnet sind als die auf einem größeren Radius angeordneten Aufnahmepositionen (6).

8. Vorrichtung (1) nach einem der vorhergehenden Ansprüche, wobei die Vorrichtung (1) einen Zahnkranz (10) zum Eingriff in ein motorisiertes Zahnrad (28) aufweist.

9. Vorrichtung (1) nach Anspruch 8, wobei der Zahnkranz (10) dadurch gebildet ist, dass die mit der Basisplatte (16) lösbar verbundenen, kreisringsegmentförmigen Halterungen (2) einen gezahnten Rand aufweisen.

10. Vorrichtung (1) nach einem der vorhergehenden Ansprüche, wobei die Basisplatte (16) eine zum Mittelpunkt hin gewandte, umlaufende Schneide (20) zum Eingriff in umlaufende Nuten (22) von drehbar gelagerten Zylindern (24)aufweist.

11. Automatisches Analysegerät mit einer Vorrichtung (1) zum Transport von Reaktionsgefäßen nach einem der vorhergehenden Ansprüche, wobei die Vorrichtung (1) drehbar gelagert ist.

12. Analysegerät nach Anspruch 11, wobei die Vorrichtung (1) einen Zahnkranz (10) aufweist und wobei das Analysegerät ferner mindestens ein motorisiertes Zahnrad (28) zum Eingriff in den Zahnkranz (10) aufweist.

13. Analysegerät nach einem der Ansprüche 11 und 12, wobei die Basisplatte (16) der Vorrichtung (1) eine zum Mittelpunkt hin gewandte, umlaufende Schneide (20) aufweist und wobei das Analysegerät ferner mindestens zwei drehbar gelagerte Zylinder (24) mit umlaufenden Nuten (22) zum Eingriff in die umlaufende Schneide (20) aufweist.

14. Analysegerät nach Anspruch 13, umfassend mindestens drei drehbar gelagerte Zylinder (24), wobei einer der Zylinder (24) selbstrückstellend in Richtung des Mittelpunktes der Vorrichtung (1) schwenkbar ist.

15. Halterung (2) mit einer Mehrzahl von Aufnahmepositionen (4, 6) für jeweils ein Reaktionsgefäß, **dadurch gekennzeichnet, dass** die Halterung (2) kreisringsegmentförmig ausgestaltet ist.

16. Halterung (2) nach Anspruch 15, **dadurch gekennzeichnet, dass** die Halterung (2) aus Kunststoff gebildet ist.

17. Halterung (2) nach einem der Ansprüche 15 und 16, **dadurch gekennzeichnet, dass** die Halterung (2) einen gezahnten Rand aufweist.

18. Halterung (2) nach einem der Ansprüche 15 bis 17, **dadurch gekennzeichnet, dass** die Aufnahmepositionen (4, 6) der Halterung (2) auf unterschiedlichen Radien des Kreisringsegments konzentrisch angeordnet sind.

19. Halterung (2) nach Anspruch 18, **dadurch gekennzeichnet, dass** die auf einem geringeren Radius angeordneten Aufnahmepositionen (4) höher angeordnet sind als die auf einem größeren Radius angeordneten Aufnahmepositionen (6).
